# EUROPÄISCHE PATENTSCHRIFT

(11) **EP 1 135 432 B1**
(45) Veröffentlichungstag und Bekanntmachung des Hinweises auf die Patenterteilung: **26.03.2003**
(21) Anmeldenummer: 99958018.6
(22) Anmeldetag: 10.11.1999
(51) Int. Cl.: C08K 3/30

(54) **ZUBEREITUNG MIT EINEM GEHALT AN REA-GIPS, VERFAHREN ZU DEREN HERSTELLUNG UND VERWENDUNG DER ZUBEREITUNG**
PREPARATION CONTAINING GYPSUM FROM FLUE GAS DESULPHURISATION, METHOD FOR USING THE SAME AND USE THEREOF
PREPARATION CONTENANT DU PLATRE DE DESULFURATION DES GAZ DE FUMEE, PROCEDE PERMETTANT DE L'UTILISER ET UTILISATION

(30) Priorität: 17.11.1998 DE 19853006
(43) Veröffentlichungstag der Anmeldung: 26.09.2001
(73) Patentinhaber: Henkel Kommanditgesellschaft auf Aktien, 40589 Düsseldorf-Holthausen (DE)
(72) Erfinder: KLEIN, Johann, D-40593 Düsseldorf (DE); SCHILLING, Gaby, D-40219 Düsseldorf (DE); SIPMANN, Sabine, D-40789 Monheim (DE); SCHÜTZE, Ralph, D-40724 Hilden (DE); KÖPNICK, Friedhelm, D-40229 Düsseldorf (DE); LOTH, Helmuth, D-45136 Essen (DE); HELPENSTEIN, Klaus, D-41199 Mönchengladbach (DE); KLAUCK, Wolfgang, D-40670 Meerbusch (DE); MAI, Claudia, D-40591 Düsseldorf (DE)
(86) Internationale Anmeldenummer: EP9908645
(87) Internationale Veröffentlichungsnummer: WO00029473

(56) Entgegenhaltungen:
- DE-A- 4 134 550
- DE-A- 19 543 886

## Beschreibung

Die Erfindung betrifft eine Zubereitung, enthaltend ein wasserlösliches Polymeres oder ein wasserdispergierbares Polymeres, oder ein Gemisch aus zwei oder mehr davon und Gipspartikel aus Rauchgasentschwefelungsanlagen (REA-Gips) mit einem Wert für die Teilchengrößenverteilung x50 von 13 bis 500 µm, ein Verfahren zu deren Herstellung und ihre Verwendung.

Anorganische, inerte Füllstoffe und polymere Materialien werden häufig im Gemisch miteinander eingesetzt. In Abhängigkeit vom Massenverhältnis von Füllstoff zum polymeren Material lassen sich dem aus einem solchen Gemisch erhältlichen Endprodukt Eigenschaften zuordnen, die bei der Verwendung eines jeweils ausschließlich aus einem der Materialien bestehenden Werkstoffs (entweder nur Polymer oder nur Füllstoff) gar nicht, oder nur unter großen Schwierigkeiten zu erreichen wären. Die Kombination aus anorganischem inertem Füllstoff und Polymeren wird nicht zuletzt deshalb häufig angestrebt und eingesetzt, weil beide Materialien stark unterschiedliche Eigenschaftsprofile aufweisen, deren Kombination in vielen Anwendungsbereichen nicht nur erwünscht, sondern sogar erforderlich ist.

Füllstoffe, die in der Regel aus einer Vielzahl einzelner, loser Füllstoffpartikel bestehen, verhalten sich häufig gegenüber ihrer Umgebung chemisch inert. Eine formgebende Verarbeitung solcher Füllstoffpartikel ist daher häufig nur zusammen mit einem Bindemittel möglich. Als Bindemittel kommen in diesem Zusammenhang beispielsweise organische oder anorganische Bindemittel in Frage. Eine Ausnahme hiervon bilden diejenigen Füllstoffe, die unter Reaktion mit einem in der Umgebung vorhandenem Reaktionspartner zu festen Massen abbinden können. Beispiele hierfür sind Gips in Form des Anhydrits bzw. verschiedene Kalkverbindungen, die unter Reaktion mit Wasser oder Kohlendioxid aus der Umgebungsluft aushärten können.

Während die oben genannten selbstabbindenden Füllstoffe in der Regel zu spröden, harten Massen aushärten, läßt sich durch Ersatz der anorganischen Werkstoffe durch Polymere oft ein deutlich breiteres Spektrum physikalischer und chemischer Eigenschaften realisieren. Nachteilig wirkt sich beim ausschließlichen Einsatz von Polymeren jedoch in der Regel der im Vergleich zu anorganischen Materialien erhöhte Herstellungsaufwand, sowie deren geringere Härte und chemische Beständigkeit, insbesondere in Hinblick auf Feuerbeständigkeit und Flammschutz, aus.

Besonders die Baustoffindustrie hat in diesem Zusammenhang einen ständig steigenden Bedarf an neuen Materialien, welche die positiven Eigenschaften von Füllstoffen, wie deren chemische Beständigkeit, Hitzeunempfindlichkeit, Verfügbarkeit in großen Mengen und geringen Preis, mit denen der Polymeren kombinieren. Der Bedarf reicht dabei von Oberflächenbeschichtungsmitteln oder Klebstoffen, die in der Regel nur als dünne Schicht auf Oberflächen unterschiedlichster Beschaffenheit aufgetragen werden, über Spachtel- und Dichtungsmassen, bis hin zu Kunststoffen, wie sie beispielsweise als Ummantelung für Stromführungskabel oder als Wasserleitungen eingesetzt werden.

So beschreiben beispielsweise Wirsching, Hüller, Hoffmann und Pürzer in ZKG INTERNATIONAL, Nr.5, 1995 (48. Jahrgang), S. 241 - 256 (Bauverlag GmbH), die Verwendung von Füllstoffen aus REA-Gips. Die Druckschrift beschreibt insbesondere die Verwendung von REA-Gips aus Steinkohlekraftwerken in Klebstoffen, Anstrichstoffen und Kunststoffen. Der Gips wird vor seiner Anwendung als Füllstoff einer Feinmahlung unterzogen, so daß der mittlere Teilchendurchmesser bei etwa 8- 12 µm und der obere Schnitt des Teilchendurchmessers bei etwa 25 - 50 µm liegt.

Die JP 76-139114 betrifft die Verwendung von REA-Gips als Pigment in Beschichtungsmitteln. Die Druckschrift beschreibt eine Zusammensetzung aus Titandioxid, REA-Gips, Aluminiumsilikat, Ethylen-Vinylacetat Copolymer, Polyvinylacetat, Verdicker und Wasser als eine weiße Emulsion, die als Beschichtungsmittel geeignet ist.

Füllstoffhaltige Polymermaterialien werden oft in Form wässriger Dispersionen angeboten und verarbeitet. Oft weisen solche Materialien bei und nach ihrer Verarbeitung jedoch gravierende Nachteile auf. Zum einen läßt sich oft die Viskosität der Dispersionen nicht auf einen verarbeitungsgerechten Wert einstellen, zum anderen zeigt sich nach der Verarbeitung, in der Regel nachdem der Trockenvorgang abgeschlossen ist, eine deutliche Volumenveränderung der aufgebrachten füllstoffhaltigen Polymermasse gegenüber dem Zeitpunkt des Aufbringens. Eine solche Volumenänderung kann häufig dem Maß, wie es durch die Verdunstung in der Dispersion enthaltenen Wassers zu erwarten wäre, entsprechen.

Insbesondere bei füllstoffhaltigen Polymerdispersionen, die eine "füllende" Funktion wahrnehmen sollen, ist ein solches Verhalten (häufig mit "Schrumpf" oder "Beifallen" bezeichnet) unerwünscht. So wird beispielsweise bei Oberflächenbeschichtungen häufig auf einen Ausgleich struktureller Unebenheiten des Untergrundes Wert gelegt. Bei Spachtel- oder Dichtungsmassen ist es beispielsweise erwünscht, daß der ausgefüllte oder abzudichtende Hohlraum auch nach dem Trocknen der eingebrachten Masse noch möglichst vollständig in dem Umfang ausgefüllt wird, in dem die Dispersion ursprünglich eingebracht wurde.

Das Beifallen von Spachtelmassen führt außerdem häufig beim Trocknen der Spachtelmasse zu einer Rißbildung in der Spachtelmasse selbst, die neben in der Regel augenfälligen optischen Nachteilen oft auch Angriffspunkte für das Eindringen von korrosiven Verbindungen oder Feuchtigkeit darstellt. Der optische Eindruck und die Haltbarkeit einer solchen ausgefüllten Stelle werden dadurch oft drastisch reduziert.

Oft werden füllstoffhaltige Polymermaterialien als Klebstoffe, insbesondere in Form von Dispersionsklebstoffen, eingesetzt. Solche Klebstoffe weisen jedoch oft eine mangelnde Elastizität auf, die für die Haltbarkeit der Klebeverbindung unter Beanspruchung häufig nachteilig ist.

Die Aufgabe der vorliegenden Erfindung besteht nun darin, diesen Nachteilen abzuhelfen. Gelöst wurde die erfindungsgemäße Aufgabe durch eine Polymerzusammensetzung, die neben einem wasserlöslichen oder wasserdispergierbaren Polymeren oder einem Gemisch aus zwei oder mehr solcher Polymerer noch Füllstoffpartikel enthält, wobei als Füllstoffpartikel Gipspartikel aus Rauchgasentschwefelungsanlagen enthalten sind, deren Teilchengrößenverteilung einen mittleren Durchmesser (x50) von etwa 13 bis etwa 500 µm aufweist.

Gegenstand der Erfindung ist demnach eine Zubereitung, enthaltend ein wasserlösliches Polymeres oder ein wasserdispergierbares Polymeres, oder ein Gemisch aus zwei oder mehr davon, und Füllstoffpartikel, wobei als Füllstoffpartikel Gipspartikel aus Rauchgasentschwefelungsanlagen (REA-Gips) mit einem Wert für die Teilchengrößenverteilung x50 von 13 bis 500 µm (gemessen mit Sympatec Helos H0720 in Isopropanol) enthalten sind.

Unter einer "Zubereitung" wird im Rahmen der vorliegenden Erfindung jedes Gemisch verstanden, das die oben genannten Bestandteile enthält. Es kann sich dabei um ein Gemisch handeln, das bereits in einer für den vorgesehenen Anwendungszweck geeigneten Form vorliegt (beispielsweise bereits mit einer geeigneten Menge Wasser versehen) oder das zunächst vom Anwender in eine für die Anwendung geeignete Form gebracht werden muß, beispielsweise als in Wasser dispergierbares Pulver.

Unter einem "wasserlöslichen Polymeren oder wasserdispergierbaren Polymeren" wird im Rahmen der vorliegenden Erfindung ein Polymeres verstanden, das im Gemisch mit Wasser entweder eine monokulardisperse Lösung, ein im wesentlichen stabiles Gel oder Kolloid oder eine im wesentlichen stabile Dispersion ergibt. Es spielt im Rahmen der vorliegenden Erfindung keine Rolle, ob die Stabilität der genannten wäßrigen Zubereitungsformen sich bereits aus der Eigenschaft des Polymeren selbst ergibt oder durch Zusatzstoffe wie Emulgatoren, Stabilisatoren, Gelbildner oder dergleichen unterstützt wird.

Die erfindungsgemäße Zubereitung kann beispielsweise nur ein bestimmtes wasserlösliches Polymeres oder ein bestimmtes wasserdispergierbares Polymeres enthalten. Es ist jedoch genauso gut möglich, daß die Zubereitung ein Gemisch aus zwei oder mehr wasserlöslichen Polymeren oder ein Gemisch aus zwei oder mehr wasserdispergierbaren Polymeren enthält. Ebenfalls ist es im Rahmen der vorliegenden Erfindung möglich, daß die Zubereitung ein Gemisch aus einem oder mehreren wasserlöslichen Polymeren und einem oder mehreren wasserdispergierbaren Polymeren enthält.

Die Wasserlöslichkeit bzw. Selbstdispergierbarkeit von Polymeren kann beispielsweise auf der Anwesenheit von anionischen oder katonischen Gruppen beruhen, wie sie üblicherweise zum Erreichen eines solchen Zweckes an Polymeren vorliegen. Ebenso ist es möglich, daß zur Erzielung von Wasserlöslichkeit bzw. Wasserdispergierbarkeit an einem im Rahmen der vorliegenden Erfindung einsetzbaren Polymeren nichtionische Gruppen angebracht werden, die zu einer Wasserlöslichkeit bzw. Wasserdispergierbarkeit des Polymeren führen.

Als katonische Gruppen sind beispielsweise quaternisierte Aminogruppen geeignet, als anionische Gruppen eignen sich insbesondere Säuregruppen.

So können beispielsweise wasserlösliche Polymere im Rahmen der vorliegenden Erfindung eingesetzt werden, wie sie durch Polymerisation von Monomerbestandteilen erhältlich sind, die den Polymeren Wasserlöslichkeit verleihen. Hierzu zählen beispielsweise die Polymerisate der Acrylsäure und die durch Polyaddition von Alkylenoxiden erhältlichen Polymeren. Ebenfalls geeignet sind Polymere, die in Wasser "selbstdispergierbar" sind. Unter dem Begriff "selbstdispergierbare Polymere" werden Polymere verstanden, die ohne Zugabe von Emulgatoren oder Dispergatoren in Wasser eine im wesentlichen stabile Dispersion bilden. In der Regel weisen solche Polymeren als funktionelle Gruppen beispielsweise Carbonsäuregruppen, Sulfonsäuregruppen, Phosphonsäuregruppen oder Kettensegmente aus Polyethylenoxid, oder ein Gemisch aus zwei oder mehr der genannten funktionellen Gruppen, auf.

Polymere, die weder wasserlöslich noch "selbstdispergierbar" sind, können beispielsweise mit Hilfe handelsüblicher Emulgatoren oder Dispergatoren in Wasser in eine im wesentlichen stabile Emulsion oder Dispersion überführt werden.

Zu den geeigneten Polymeren zählen beispielsweise Polyurethane, Polyacrylate, Polymethacrylate, Polyvinylesther, Polystyrol und sulfoniertes Polystyrol, Polybutadien und sulfoniertes Polybutadien, Polyamide, Polyesther und Polyvinylchlorid. Ebenfalls geeignet sind entsprechende Co- und Terpolymerisate, wie Etyhlen-Vinylacetat Copolymere (EVA), Styrol-Butadien-Copolymere (SBR), Styrol-Acrylnitril Copolymere (SAN), Styrol-Acrylsäureester Copolymere und dergleichen. In einer weiteren bevorzugten Ausführungsform werden beispielsweise Polymere eingesetzt, wie aus der Polymerisation von Acrylsäureestern bzw. der Co- und Terpolymerisation von Acrylsäureestern mit Acrylnitril, Vinylestem, Maleinaten, Acrylsäure, Styrol und dergleichen erhältlich sind. Derartige Polymere und daraus resultierende Polymersdispersionen werden zum Beispiel in der "Encyclopaedia of Polymer Science and Technology" (Herausgeber Mark, Bikales, Overberger, Menges, 2. Ausgabe, 1989, Wiley, New York, 17, S. 406- 409) umfassend beschrieben.

In einer weiteren bevorzugten Ausführungsform werden zur Herstellung der erfindungsgemäßen Zubereitung wasserlösliche oder wasserdispergierbare Polymere oder deren Gemische eingesetzt, die bereits in gelöster oder dispergierter Form vorliegen. Insbesondere sind dies wäßrige Dispersionen von synthetischen Polymeren wie sie bereits oben genannt wurden, insbesondere Polyurethane, Poly(meth)acrylate, Polyvinylester, Polystyrol, Polybutadien, Polyamide oder Polyvinylchlorid, oder Gemische aus zwei oder mehr davon. Auch die entsprechenden Co- und Terpolymerisate, Styrol/Butadien, Styrol/Acrylsäureester sind ebenso im Rahmen der vorliegenden Erfindung verwendbar wie Naturlatices. Die erfindungsgemäß einsetzbaren Dispersionen können beispielsweise durch Suspensions- oder Emulsionspolymerisation der entsprechenden Monomeren hergestellt werden. Sekundärdispersionen, wie sie durch das Dispergieren einer Polymerschmelze in einem geeigneten Medium erhältlich sind, können ebenfalls eingesetzt werden.

Bevorzugt werden Polymerdispersionen, wie sie als Ergebnis von Suspensionsoder Emulsionspolymerisationen in der Regel kommerziell in großen Mengen erhältlich sind und beispielsweise als Bindemittel für Dispersionsfarben oder Dispersionsklebstoffe eingesetzt werden (siehe beispielsweise Römpp Chemie-Lexikon, Band 2, Thieme-Verlag, 1990, S. 1010- 1011, unter ausdrücklicher Bezugnahme auf die angegebene Literaturstelle und die dort zitierte weitere Literatur). Als Monomere für derartige Polymerdispersionen werden insbesondere ungesättigte, radikalisch polymerisierbare Verbindungen, wie Acryl- und Methacrylsäureester, Diene oder Olefine, oder Gemische aus zwei oder mehr davon verwendet. Die Suspensions- bzw. Emulsionspolymerisation ist beispielsweise in "Ullmann's Enzyklopädie der technischen Chemie" (Band A21, 5. Aufl., VCH, 1987) beschrieben, wobei auf diese Literaturstelle ausdrücklich Bezug genommen wird.

Im Rahmen einer bevorzugten Ausführungsform der vorliegenden Erfindung eingesetzte Polymerdispersionen basieren auf Polyvinylestern wie Polyvinylacetat, sowie Co- und Terpolymeren der Vinylester mit Monomeren, wie Ethylen, Acrylund Methacrylsäureester oder Maleinsäuremono- und -diestem, oder Gemischen aus zwei oder mehr davon. Monomere, die zu Dispersionen führen wie sie im Rahmen der vorliegenden Erfindung eingesetzt werden können, sind beispielsweise in Ullmann's Enzyklopädie der technischen Chemie (Band A22, 1993, VCH, S. 1 - 15) beschrieben. Dispersionen wie sie auf Basis solcher Monomerer hergestellt werden, sind beispielsweise im "Handbook of Additives" (3. Aufl., Chapman and Hall, S. 381 - 399) beschrieben. Auf die angegebenen Literaturstellen wird hiermit ausdrücklich Bezug genommen.

Im Rahmen einer bevorzugten Ausführungsform geeignete Polymere sind beispielsweise die Copolymere von Vinylacetat, Vinylpropionat oder VeoVa® 9 oder 10 mit weiteren Comonomeren. Unter VeoVa® 9 bzw. 10 werden die Vinylester von tert. Carbonsäuren (Versatic®-Säure 9 bzw. 10) zur Copolymerisation z. B. mit Vinylacetat für Dispersionsfarben, Putze, Betonzusatzmittel, Papier- u. Textilbeschichtungen, Dispersionskleber u. Anstriche verstanden (Hersteller: Deutsche Shell Chemie). Besonders geeignet sind beispielsweise Co- und Terpolymere enthaltend Vinylacetat/Dibutylmaleat, Vinylacetat/n-Butylacrylat, Vinylacetat/2-Ethylhexylacrylat, Vinylacetat/n-Butylacrylat/N-Hydroxymethylacrylamid, Vinylacetat/Crotonsäure, Vinylacetat/VeoVa® 10, Vinylacetat/VeoVa® 10/Acrylsäure, Vinylacetat/VeoVa® 10/n-Butylacrylat, Vinylacetat/N-Hydroxymethylacrylamid, Vinylacetat/Vinyllaurat, Vinylacetat/Vinyllaurat/Vinylchlorid, Vinylacetat/Ethylen/Vinylchlorid, Vinylacetat/Ethylen/Acrylsäureester, Vinylacetat/Ethylen/Acrylamid, Vinylacetat/Ethylen N-Hydroxymethylacrylamid, Vinylpropionat, Vinylpropionat/Vinylchlorid, Vinylpropionat/tert-Butylacrylat, VeoVa® 10/Vinylchlorid, VeoVa® 10/Styrol/Acrylsäureester, VeoVa® 10/Styrol/Maleat, VeoVa® 10/Styrol/Acrylsäureester/Maleat und VeoVa® 10/VeoVa® 9/Methylmethacrylat/Butylacrylat, wobei VeoVa® 10 ganz oder teilweise durch VeoVa® 9 ersetzt sein kann.

In einer weiteren bevorzugten Ausführungsform der Erfindung werden Polymerdispersionen eingesetzt, die auf Poly(meth)acrylsäureestern basieren, sowie Cound Terpolymere der (Meth)Acrylsäureester mit Monomeren wie Acrylnitril, Vinylestern, Maleinaten, Acrylsäure und Styrol. Derartige Polymerdispersionen werden beispielsweise in "Emulsion Polymerisation and Emulsion Polymers" (1997, John Wiley, S. 619 - 655, New York) umfassend beschrieben und werden als Bestandteil der vorliegenden Offenbarung angesehen.

Im Rahmen einer weiteren Ausführungsform der Erfindung ist der Einsatz kommerziell erhältlicher Dispersionen wie DL 345 (Hersteller: Dow Latex) oder Acronal® DS 3518 (Hersteller: BASF AG) bevorzugt.

Ebenfalls im Rahmen der vorliegenden Erfindung einsetzbar sind wäßrige Polymerdispersionen auf der Basis konjungierter Diene wie Chloropren oder Butadien, sowie Copolymere dieser Diene mit ungesättigten Verbindungen wie Styrol oder Acrylnitril, Derartige Dispersionen sind bekannt und werden beispielsweise in "Emulsion Polymerisation and Emulsion Polymers" (John Wiley, 1997, S. 521 - 561, New York) beschrieben. Auf die genannte Literaturstelle wird hiermit ausdrücklich Bezug genommen.

Neben den genannten Monomeren können zur Herstellung der erfindungsgemäß einsetzbaren Polymerdispersionen Monomere mit zusätzlichen funktionellen Gruppen, wie N-Methylolacrylamid, Hydroxypropylacrylat, (Meth)Acrylsäure oder ein Gemisch aus zwei oder mehr der genannten Verbindungen verwendet werden.

Die erfindungsgemäßen Zubereitungen enthalten als Füllstoff mindestens REA-Gipspartikel mit einem Wert für die Teilchengrößenverteilung x50 von 13 bis 500 µm (gemessen mit Sympatec Helos H0720 in Isopropanol).

In Abhängigkeit von den technischen Gegebenheiten in unterschiedlichen Rauchgasentschwefelungsanlagen entstehen REA-Gipspartikel unterschiedlicher Dimensionen. Im Rahmen der vorliegenden Erfindung hat sich herausgestellt, daß die erfindungsgemäßen Vorteile sich mit REA-Gipspartikeln mit den oben genannten Werten für die Teilchengrößenverteilung erzielen lassen.

Zur Messung einer Teilchengrößenverteilung und des entsprechenden Wertes x50 können in der Regel unterschiedliche Verfahren angewandt werden. Gängige Verfahren umfassen beispielsweise das Siebverfahren, bei dem eine bestimmte Menge Partikel mit Hilfe von Sieben unterschiedlicher Maschenweite gesiebt wird. Die Gesamtmenge der Partikel wird dadurch in Fraktionen unterschiedlichen Teilchendurchmessers aufgeteilt, deren Menge als prozentualer Anteil am Gesamtgewicht der untersuchten Partikel angegeben wird. Weitere Möglichkeiten zur Bestimmung der Teilchengrößenverteilung stellen beispielsweise Lichtstreuung und Fraunhofer-Beugung dar. Im Rahmen der vorliegenden Erfindung wurde die Teilchengrößenverteilung der REA-Gipspartikel bezogen auf das Maßsystem der Fraunhofer-Beugung angegeben. Hierzu wurde ein Meßgerät der Firma Sympatec, Helos H0720 benutzt. Die Teilchengrößenverteilung wurde an einer Suspension in Isopropanol gemessen. Die folgenden Angaben zur Teilchengrößenverteilung beziehen sich auf Messungen mit dem genannten Meßsystem, sind aber nicht auf solche Messungen beschränkt. Die erfindungsgemäßen Vorteile lassen sich in der Regel mit allen REA-Gipspartikeln erzielen, deren Teilchengrößenverteilung, unabhängig vom Meßsystem, etwa im angegebenen Bereich liegt.

In einer bevorzugten Ausführungsform der vorliegenden Erfindung weisen die REA-Gipspartikel eine untere Grenze für die Teilchengröße x50 von mindestens etwa 25 µm auf. In einer weiteren bevorzugen Ausführungsform beträgt der Wert für die Teilchengrößenverteilung x50 von etwa 30 bis 250 µm. Gute Ergebnisse lassen sich beispielsweise bei Werten für die Teilchengrößenverteilung x50 von etwa 35 bis etwa 200 oder etwa 150 µm erzielen. In einer weiteren bevorzugten Ausführungsform der Erfindung werden REA-Gipspartikel mit einem Wert x50 für die Teilchengrößenverteilung von etwa 40 bis etwa 120 µm, beispielsweise etwa 60 bis etwa 110 um, insbesondere etwa 80 bis etwa 100 µm eingesetzt.

Es hat sich weiterhin herausgestellt, daß es vorteilhaft ist, wenn die Füllstoffpartikel eine granulare bis stäbchenartige Form aufweisen.

Die erfindungsgemäß als Füllstoffpartikel eingesetzten REA-Gipspartikel zeigen ihre erfindungsgemäßen Vorteile bereits dann, wenn sie als alleiniger Füllstoff eingesetzt werden. In diesem Fall werden in einer bevorzugten Ausführungsform der Erfindung REA-Gipspartikel mit einem Wert x50 für die Teilchengrößenverteilung von etwa 13 bis etwa 110 µm, insbesondere von etwa 35 bis etwa 80 µm eingesetzt.

Im Rahmen einer weiteren bevorzugten Ausführungsform der vorliegenden Erfindung werden die REA-Gipspartikel im Gemisch mit mindestens einer weiteren Art anorganischer Füllstoffpartikel eingesetzt.

Unter einer "weiteren Art" anorganischer Füllstoffpartikel werden im Rahmen der vorliegenden Erfindung alle Füllstoffpartikel verstanden, die sich von REA-Gipspartikeln entweder in ihrer chemischen Zusammensetzung, ihrer überwiegenden Raumform (beispielsweise ihrer Kristallform) oder in ihrem Wert x50 der Teilchengrößenverteilung, oder in einer Kombination aus zwei oder mehr der genannten Merkmale, unterscheiden. In einer bevorzugten Ausführungsform der vorliegenden Erfindung werden als weitere Art anorganischer Füllstoffpartikel solche Füllstoffpartikel eingesetzt, die sich mindestens im Wert x50 ihrer Teilchengrößenverteilung von dem entsprechenden Wert der Teilchengrößenverteilung der REA-Gipspartikel unterscheiden.

Als weitere Art anorganischer Füllstoffpartikel eignen sich beispielsweise alle anorganischen, gegenüber den weiteren in der erfindungsgemäßen Zubereitung befindlichen Stoffen inerten Füllstoffpartikel. Für die weitere Art anorganischer Füllstoffpartikel gibt es bezüglich des Werts für die Teilchengrößenverteilung x50 keine besonderen Beschränkungen. So können beispielsweise Füllstoffpartikel mit einem Wert für die Teilchengrößenverteilung x50 von etwa 0,01 bis etwa 500 µm im Rahmen der vorliegenden Erfindung eingesetzt werden.

Als weitere Art anorganischer Füllstoffpartikel eignen sich beispielsweise Füllstoffpartikel aus Andalusit, Sillimanit, Kyanit, Mullit, Pyrophyllit, Imogolit oder Allophan. Weiterhin geeignet sind Verbindungen auf der Basis von Natriumaluminaten oder Calciumsilikaten. Ebenfalls geeignet sind Mineralien wie Kieselerde, Calciumsulfat (Gips), das nicht aus Rauchgasentschwefelungsanlagen stammt in Form von Anhydrit, Halbhydrat oder Dihydrat, Quarzmehl, Kieselgel, Bariumsulfat, Titandioxid, Zeolithe, Leucit, Kalifeldspat, Biotit, die Gruppe der Soro-, Cyclo-, Ino-, Phyllo- und Tectosilikate, die Gruppe der schwer löslichen Sulfate, wie Gips, Anhydrit oder Schwerspat, sowie Calciummineralien, wie Calcit oder Kreide (CaCO₃). Die genannten anorganischen Materialien können im Rahmen der vorliegenden Erfindung einzeln als weitere Art anorganischer Füllstoffpartikel eingesetzt werden. Es ist jedoch ebensogut möglich, ein Gemisch aus zwei oder mehr der genannten Verbindungen einzusetzen. Im Rahmen einer bevorzugten Ausführungsform der Erfindung werden Calcit, Kaolin, Dolomit, Quarzmehl, und Gips (CaSO₄ * 2 H₂O) eingesetzt.

In einer weiteren bevorzugten Ausführungsform der vorliegenden Erfindung weisen die Füllstoffpartikel der weiteren Art einen Wert x50 für die durchschnittliche Teilchengrößenverteilung von etwa 1 bis etwa 120 µm, beispielsweise etwa 3 bis etwa 60 oder etwa 60 bis etwa 90 µm auf.

Ebenfalls zum Einsatz als weitere Art Füllstoffpartikel geeignet sind organische Füllstoffpartikel, die sich nicht ohne weiteres zu den wasserlöslichen oder wasserdispergierbaren Polymeren einordnen lassen. Hierzu zählen insbesondere feinvermahlene Kunststoffmehle, wie sie beim Recycling von Kunststoffen anfallen können. Insbesondere zählen hierzu Kunststoffmehle, wie sie aus der Feinvermahlung von hochvernetzten elastomeren oder duromeren Polymeren erhältlich sind. Ein Beispiel hierfür ist Gummimehl wie es beispielsweise durch Feinvermahlung von Autoreifen entsteht.

Wenn die erfindungsgemäße Zubereitung Anteile der weiteren Art Füllstoffpartikel, einzeln oder als Gemisch aus zwei oder mehr davon, aufweist, dann beträgt das Gewichtsverhältnis von REA-Gipspartikeln zu Füllstoffpartikeln der weiteren Art etwa 1:1000 bis etwa 1000 zu 1. Gute Ergebnisse lassen sich beispielsweise erzielen, wenn das Gewichtsverhältnis von REA-Gipspartikeln zu Füllstoffpartikeln der weiteren Art etwa 1:10 bis etwa 10 zu 1, insbesondere etwa 5:1 bis etwa 1:5 beträgt.

In einer weiteren bevorzugten Ausführungsform der vorliegenden Erfindung weist der Füllstoffanteil in der Zubereitung mindestens etwa 0,5 Gew.-%, insbesondere mindestens etwa 1 Gew.-% REA-Gipspartikel auf. In einer weiteren bevorzugten Ausführungsform der vorliegenden Erfindung liegt der Anteil an REA-Gipspartikeln bei mindestens etwa 10 Gew.-% oder mindestens etwa 20 Gew.-%. Gute Ergebnisse werden auch mit Anteilen an REA-Gipspartikel von mindestens etwa 30, 40 oder 50 Gew.-% oder darüber, beispielsweise etwa 60 bis 80 Gew.-% oder mindestens etwa 90 Gew.-%, erzielt.

Die erfindungsgemäße Zubereitung enthält in einer bevorzugten Ausführungsform mindestens etwa 20 Gew.-% Fütlstoffpartikel (REA-Gipspartikel oder weitere Füllstoffpartikel oder deren Gemisch). Es ist ebenso möglich einen höheren Anteil an Füllstoffpartikeln zuzugeben, beispielsweise etwa 30, 40 oder 50 bis 99 Gew.-%, beispielsweise etwa 60 bis 90 Gew.-%.

Die erfindungsgemäßen Zusammensetzungen können als anwendungsfertige wäßrige Dispersion vorliegen, d.h., sie können das wasserlösliche oder wasserdispergierbare Polymere oder das Gemisch aus zwei oder mehr solcher Polymeren und den Füllstoffen zusammen mit Wasser enthalten. Es ist im Rahmen der vorliegenden Erfindung jedoch ebensogut möglich, daß die erfindungsgemäße Zusammensetzung kein Wasser oder nur wenig Wasser enthält, d.h., beispielsweise als trockenes Pulver oder als Paste mit geringem Wassergehalt vorliegt. Es ist im Rahmen der vorliegenden Erfindung ebenfalls möglich, daß die erfindungsgemäße Zubereitung als wasserfreie Paste vorliegt, wobei zur Erzeugung der pastösen Eigenschaften eine nicht-wäßrige Flüssigkeit, beispielsweise ein Lösemittel oder ein sonstiger Bestandteil der erfindungsgemäßen Zubereitung eingesetzt wurde. Solche Pulver oder Pasten sind beispielsweise dann von Vorteil, wenn dem Anwender die Zubereitung einer zur Anwendung bestimmten wäßrigen Dispersion selbst überlassen werden soll. In einer bevorzugten Ausführungsform der vorliegenden Erfindung liegt die erfindungsgemäße Zubereitung als Pulver (Redispersionspulver) vor.

Werden im Rahmen der vorliegenden Erfindung REA-Gipspartikel als Füllstoff eingesetzt, so ist darauf zu achten, daß die Stabilität der verwendeten Polymerdispersion gegenüber Calciumionen getestet wird. Gegebenenfalls muß die Stabilisierung in einem solchen Fall durch Zugabe eines weiteren Emulgators oder Dispergators oder eines Gemisches aus zwei oder mehr Emulgatoren oder Dispergatoren wieder hergestellt bzw. verbessert werden.

Neben dem oder den Polymeren und den Füllstoffpartikeln kann die erfindungsgemäße Zubereitung noch weitere Inhaltsstoffe aufweisen. Wenn die erfindungsgemäße Zubereitung in bereits anwendungsfähigem Zustand sein soll, so kann die erfindungsgemäße Zubereitung Wasser enthalten. Je nach Art der vorhandenen Anwendung der erfindungsgemäßen Zubereitung, kann die Wassermenge zwischen etwa 0 und 49 Gew.-% variieren.

Grundsätzlich geeignet sind Wassergehalte (bezogen auf die gesamte Zubereitung) von etwa 0 bis 49 Gew.-%.

Zusätzlich zu den genannten Bestandteilen kann die erfindungsgemäße Zusammensetzung noch einen oder mehrere weitere Zusatzstoffe enthalten.

Als weitere Zusatzstoffe eignen sich beispielsweise Emulgatoren, Dispergatoren, Stabilisatoren, Entschäumer, Antioxidantien, Photostabilisatoren, Pigmentverteiler und dergleichen.

Ebenfalls Gegenstand der Erfindung ist ein Verfahren zur Herstellung einer Zubereitung enthaltend ein wasserlösliches Polymeres oder ein wasserdispergierbares Polymeres, oder deren Gemisch, und REA-Gipspartikel mit einer Teilchengröße x50 von 13 bis 500 µm (gemessen mit Sympatec Helos H0720 in Isopropanol) oder ein Gemisch von REA-Gipspartikeln und mindestens einer weiteren Art anorganischer Füllstoffpartikel, dadurch gekennzeichnet, daß mindestens ein wasserlösliches Polymeres oder mindestens ein wasserdisperglerbares Polymeres, oder ein Gemisch aus zwei oder mehr davon, oder eine wäßrige Dispersion enthaltend eines oder mehrere solcher Polymeren, mit REA-Gipspartikeln mit einer Teilchengröße x50 von 13 bis 500 µm (gemessen mit Sympatec Helos H0720 in Isopropanol) oder einem Gemisch von REA-Gipspartikeln und mindestens einer weiteren Art anorganischer Füllstoffpartikel sowie gegebenenfalls mit Wasser und einem oder mehreren weiteren Zusatzstoffen in einem oder mehreren Mischschritten in beliebiger Reihenfolge und beliebigen zeitlichen Abständen zwischen einzelnen Mischschritten, vermischt wird.

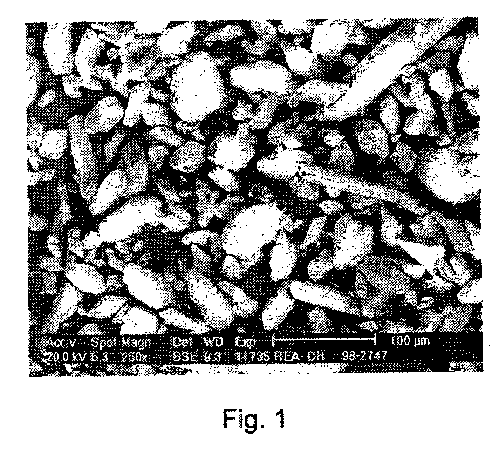

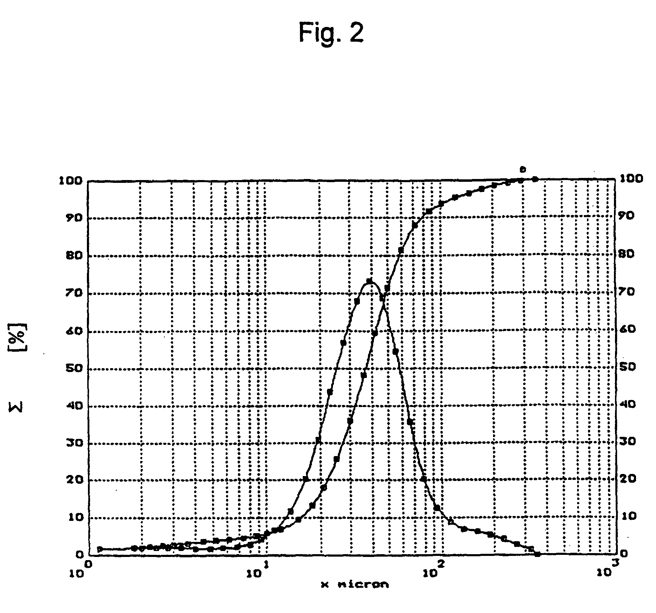

Die Erfindung wird durch die Zeichnung näher erläutert. Die Zeichnung zeigt
- Als Fig. 1 eine elektronenmikroskopische Aufnahme von REA-Gips, der eine granulare bis stäbchenförmige Partikelform aufweist,
- Als Fig. 2 die Größenverteilung der Füllstoffpartikel eines beispielhaft als Füllstoff eingesetzten REA-Gipses.

Ein weiterer Gegenstand der vorliegenden Erfindung ist die Verwendung von REA-Gipspartikeln mit einem Wert x50 der Teilchengrößenverteilung von 13 bis 500 µm (gemessen mit Sympatec Helos H0720 in Isopropanol) zur Herstellung von Oberflächenbeschichtungen, Spachtelmassen, Dichtungsmassen, Klebstoffen oder Formkörpern mit einem Gehalt an wasserlöslichen oder wasserdispergierbaren Polymeren.

In einer bevorzugten Ausführungsform der Erfindung weisen die REA-Gipspartikel einen Wert x50 für die Teilchengrößenverteilung von 30 bis 250 µm auf.

Ebenfalls Gegenstand der vorliegenden Erfindung ist die Verwendung eines Gemischs anorganischer Füllstoffpartikel, enthaltend REA-Gipspartikel mit einem Wert x50 für die Teilchengrößenverteilung von 30 bis 250 µm und mindestens eine weitere Art anorganischer Füllstoffpartikel, als Füllstoff in Polymerdispersionen,

Die Erfindung wird nachfolgend durch Beispiele näher erläutert.

### Beispiele:

### Beispiel 1: Elastizität von Dispersionsklebstoffen

### Erfindungsgemäße Zusammensetzungen zeigen beim Einsatz als Dispersionsklebstoff ein gutes Dehnverhalten

### Rezeptur:

| | |
|---|---|
| Acrylatdispersion (z.B. Acronal® DS 3518, Fa. BASF) | 55 g |
| Pigmentverteiler (z.B. Pigmentverteiler A, Fa. BASF) | 2g |

### Füllstoffe:

A: feiner Calcitfüllstoff (z.B. Omyacarb 5GU, Fa. Omya, D50-Wert 6 µm)
B: ungemahlener REA-Gips (z.B. Fa. Rethmann, D50-Wert 40 µm)
C: gemahlener Naturgips (z.B. Alabaster Brilliantweiß, Fa. Börgardts, D50-Wert 11 µm)
D: grober Calcitfüllstoff (z.B. 50/50-Mischung Omyacarb 130 AL/Omyacarb 40 GU, Fa. Omya, D50-Wert (Mischung) 88 µm)

| **Gewichtsgleicher Füllstoffaustausch** | | | | | | | |
|---|---|---|---|---|---|---|---|
| Füllstoffmischung | | | | | max. Kraft [kN/mm²] | Dehnung bei max. Kraft [%] | Bruchdehnung [%] |
| **A [%]** | **A [g]** | **B [g]** | **C [g]** | **D [g]** | | | |
| 0 | 0 | 84 | - | - | 0,01 | 260 | 2840 |
| 50 | 42 | 42 | - | - | 0,02 | 680 | 1060 |
| 100 | 84 | 0 | - | - | 0,03 | 190 | 830 |
| 0,02 | 0 | - | 84 | - | 0,02 | 90 | 1050 |
| 0,03 | 42 | - | 42 | - | 0,03 | 140 | 900 |
| 100 | 84 | - | 0 | - | 0,03 | 190 | 830 |
| 0 | 0 | - | - | 125 | 0,01 | 420 | 2330 |
| 20 | 25 | - | - | 100 | 0,02 | 390 | 1500 |
| 50 | 62,5 | - | - | 62,5 | 0,02 | 340 | 1250 |
| 80 | 100 | - | - | 25 | 0,03 | 280 | 780 |
| 100 | 125 | - | - | 0 | 0,03 | 130 | 630 |

### Beispiel 2: Volumenschwund bei Spachtelmassen in Abhängigkeit von der Füllstoffzusammensetzung

### Optische Beurteilung

### Rezeptur:

| | |
|---|---|
| Styrolacrylatdispersion (z.B. DL 345, Fa. Dow Latex) | 110 g |
| Pigmentverteiler (z.B. Pigmentverteiler A, Fa. BASF) | 4 g |
| Füllstoff: | 250g bzw. 90 ml |

Füllstoffeinsatz jeweils in 50- oder 100%igem volumen- oder gewichtsgleichem Austausch zu Füllstoff A (optische Bewertung: -)
A: feiner Calcitfüllstoff (z.B. Omyacarb 5GU, Fa. Omya, D50-Wert 6 µm)
B: ungemahlener REA-Gips (z.B. Fa. Rethmann, D50-Wert 40 µm)
C: gemahlener Naturgips (z.B. Alabaster Brilliantweiß, Fa. Börgardts, D50-Wert 11 µm)
D: grober Calciffüllstoff (z.B. 50/50-Mischung Omyacarb 130 AL/Omyacarb 40 GU, Fa. Omya, D50-Wert (Mischung) 88 µm)
E: ungemahlener REA-Gips (z.B. Fa. ProMineral, Nr.1, D50-Wert 36 um)
F: ungemahlener REA-Gips (z.B. Fa. ProMineral, Nr.2, D50-Wert 96 um)
G: mittelgrober Calcitfüllstoff (z.B. Omyacarb 40 GU, Fa. Omya, D50-Wert 44 µm)

+: kein sichtbarer Volumenschwund, keine Rißbildung
±: leichter Volumenschwund/Rißbildung
-: deutlicher Volumenschwund/Rißbildung

| | **Gewichtsgleicher Füllstoffaus- tausch** | | **Volumengleicher Füllstoffaus- tausch** | |
|---|---|---|---|---|
| Füllstoff = | 50 Gew.-% X | 100 Gew.-% X | 50 Vol.-% X | 100 Vol.-% X |
| B | ± | + | - | ± |
| C | ± | ± | - | - |
| D | - | - | - | - |
| E | - | + | - | + |
| F | + | + | + | + |
| G | - | - | - | - |

### Beispiel 3: Zugscherfestigkeit (Holz/Holz-Verklebungen) und Viskositätsverhalten von Dispersionsklebstoffen

### Rezeptur:

| | |
|---|---|
| Styrolacrylatdispersion (z.B. DL 345, Fa. Dow Latex) | 110 g |
| Pigmentverteiler (z.B. Pigmentverteiler A, Fa. BASF) | 4 g |

### Füllstoffe:

A: feiner Calcitfüllstoff (z.B. Omyacarb 5GU, Fa. Omya, D50-Wert 6 µm)
B: ungemahlener REA-Gips (z.B. Fa. Rethmann, D50-Wert 40 µm)
C: gemahlener Naturgips (z.B. Alabaster Brilliantweiß, Fa. Börgardts, D50-Wert 11 µm)
D: grober Calcitfüllstoff (z.B. 50/50-Mischung Omyacarb 130 AL/Omyacarb 40 GU, Fa. Omya, D50-Wert (Mischung) 88 µm)

| **Gewichtsgleicher Füllstoffaustausch** | | | | | | |
|---|---|---|---|---|---|---|
| Füllstoffmischung | | | | | Zugscherfestig-keit [N/mm²] | Viskosität [Skalenteile] |
| **A[%]** | **A[g]** | **B[g]** | **C[g]** | **D[g]** | | |
| 0 | 0 | 250 | - | - | 2,1 | 100 |
| 50 | 125 | 125 | - | - | 4,7 | 38 |
| 100 | 250 | 0 | - | - | 2,7 | 210 |
| 0 | 0 | - | 250 | - | 3,7 | 100 |
| 50 | 125 | - | 125 | - | 3,0 | 94 |
| 100 | 250 | - | 0 | - | 2,7 | 210 |
| 0 | 0 | - | - | 250 | 3,1 | 36 |
| 20 | 50 | - | - | 200 | 3,2 | 41 |
| 50 | 125 | - | - | 125 | 3,8 | 39 |
| 80 | 200 | - | - | 50 | 2,9 | 135 |
| 100 | 250 | - | - | 0 | 2,7 | 210 |

### Beispiel 4: Zugscherfestigkeit (Holz/Holz-Verklebungen) und Viskositätsverhalten von Dispersionsklebstoffen mit einem Gehalt an REA-Gips unterschiedlicher Teilchengrößenverteilung

### Rezeptur:

| | |
|---|---|
| Styrolacrylatdispersion (z.B. DL 345, Fa. Dow Latex) | 110 g |
| Pigmentverteiler (z.B. Pigmentverteiler A, Fa. BASF) | 4 g |

### Füllstoffe:

A: feiner Calcitfüllstoff (z.B. Omyacarb 5GU, Fa. Omya, D50-Wert 6 µm)
E: ungemahlener REA-Gips (z.B. Fa. ProMineral, Nr.1, D50-Wert 36 µm)
F: ungemahlener REA-Gips (z.B. Fa. ProMineral, Nr.2, D50-Wert 96 µm)
G: mittelgrober Calcitfüllstoff (z.B. Omyacarb 40 GU, Fa. Omya, D50-Wert 44 µm)

| **Gewichtsgleicher Füllstoffaustausch** | | | | | | |
|---|---|---|---|---|---|---|
| Füllstoffmischung | | | | | Zugscherfestig-keit [N/mm²] | Viskosität [Skalenteile] |
| **A [%]** | **A [g]** | **E [g]** | **F [g]** | **G [g]** | | |
| 0 | 0 | 250 | - | - | 2,2 | 90 |
| 20 | 50 | 200 | - | - | 2,9 | 37 |
| 50 | 125 | 125 | - | - | 3,5 | 27 |
| 80 | 200 | 50 | - | - | 3,4 | 43 |
| 100 | 250 | 0 | - | - | 2,7 | 210 |
| 0 | 0 | - | 250 | - | 1,1 | 120 |
| 20 | 50 | - | 200 | - | 1,6 | 60 |
| 50 | 125 | - | 125 | - | 2,7 | 19 |
| 80 | 200 | - | 50 | - | 4,3 | 42 |
| 100 | 250 | - | 0 | - | 2,7 | 210 |
| 0 | 0 | - | - | 250 | 3,4 | 38 |
| 20 | 50 | - | - | 200 | 3,5 | 45 |
| 50 | 125 | - | - | 125 | 3,1 | 56 |
| 80 | 200 | - | - | 50 | 2,5 | 80 |
| 100 | 250 | - | - | 0 | 2,7 | 210 |

## Patentansprüche

1. Zubereitung, enthaltend ein wasserlösliches Polymeres oder ein wasserdispergierbares Polymeres, oder ein Gemisch aus zwei oder mehr davon, und Füllstoffpartikel, wobei als Füllstoffpartikel Gipspartikel aus Rauchgasentschwefelungsanlagen (REA-Gipspartikel) mit einem Wert für die Teilchengrößenverteilung x50 von 13 bis 500 µm (gemessen mit Sympatec Helos H0720 in Isopropanol) enthalten sind.

2. Zubereitung nach Anspruch 1, **dadurch gekennzeichnet, daß** der Wert für die Teilchengrößenverteilung x50 der REA-Gipspartikel 30 µm bis 250 µm beträgt.

3. Zubereitung nach Anspruch 1 oder 2, **dadurch gekennzeichnet, daß** sie REA-Gipspartikel im Gemisch mit mindestens einer weiteren Art Füllstoffpartikel enthält.

4. Zubereitung nach Anspruch 4, **dadurch gekennzeichnet, daß** als weitere Art Füllstoffpartikel anorganische Füllstoffpartikel ausgewählt aus der Gruppe bestehend aus Kreide (CaCO₃), Titandioxid, Bariumsulfat, Quarzmehl, Kieselgel, Dolomit oder Kaolin, oder ein Gemisch aus zwei oder mehr davon, enthalten sind.

5. Zubereitung nach einem der Ansprüche 1 bis 4, **dadurch gekennzeichnet, daß** als wasserlösliches oder wasserdispergierbares Polymeres ein Polymeres ausgewählt aus der Gruppe bestehend aus Polyurethanen, Polyacrylaten, Polymethacrylaten, Polyvinylestern, Polystyrolen, Polybutadienen, Polyamiden, Polyestern, Polyvinylchloriden, Ethylen-Vinylacetat Copolymeren (EVA), Styrol-Butadien-Copolymeren (SBR), Styrol-Acrylnitril Copolymeren (SAN), Styrol-Acrylsäureester Copolymeren, oder ein Gemisch aus zwei oder mehr davon, enthalten ist.

6. Zubereitung nach einem der Ansprüche 1 bis 5, **dadurch gekennzeichnet, daß** sie mindestens 40 Gew.-% Füllstoffpartikel enthält.

7. Zubereitung nach einem der Ansprüche 1 bis 6, **dadurch gekennzeichnet, daß** 50 bis 99 Gew.-% REA-Gipspartikel oder eines Gemischs enthaltend REA-Gipspartikel und mindestens eine weitere Art anorganischer Füllstoffpartikel, 1 bis 50 Gew.-% Polymeres, 0 bis 49 Gew.-% Wasser und 0 bis 49 Gew.-% weitere Zusatzstoffe enthalten sind.

8. Verfahren zur Herstellung einer Zubereitung enthaltend ein wasserlösliches Polymeres oder ein wasserdispergierbares Polymeres, oder deren Gemisch, und REA-Gipspartikel mit einer Teilchengröße x50 von 13 bis 500 µm (gemessen mit Sympatec Helos H0720 in Isopropanol) oder ein Gemisch von REA-Gipspartikeln und mindestens einer weiteren Art anorganischer Füllstoffpartikel, **dadurch gekennzeichnet, daß** mindestens ein wasserlösliches Polymeres oder mindestens ein wasserdispergierbares Polymeres, oder ein Gemisch aus zwei oder mehr davon, oder eine wäßrige Dispersion enthaltend eines oder mehrere solcher Polymeren, mit REA-Gipspartikeln mit einer Teilchengröße x50 von 13 bis 500 µm (gemessen mit Sympatec Helos H0720 in Isopropanol) oder einem Gemisch von REA-Gipspartikeln und mindestens einer weiteren Art anorganischer Füllstoffpartikel sowie gegebenenfalls mit Wasser und einem oder mehreren weiteren Zusatzstoffen in einem oder mehreren Mischschritten in beliebiger Reihenfolge und beliebigen zeitlichen Abständen zwischen einzelnen Mischschritten, vermischt wird.

9. Verwendung von REA-Gipspartikeln mit einem Wert x50 der Teitchengrößenverteilung von 13 bis 500 µm (gemessen mit Sympatec Helos H0720 in Isopropanol) zur Herstellung von Oberflächenbeschichtungen, Spachtelmassen, Dichtungsmassen, Klebstoffen oder Formkörpern mit einem Gehalt an wasserlöslichen oder wasserdispergierbaren Polymeren.

10. Verwendung nach Anspruch 9, **dadurch gekennzeichnet, daß** die REA-Gipspartikel einen Wert x50 für die Teilchengrößenverteilung von 30 bis 250 µm aufweisen.

11. Verwendung eines Gemischs anorganischer Füllstoffpartikel, enthaltend REA-Gipspartikel mit einem Wert x50 für die Teilchengrößenverteilung von 30 bis 250 µm und mindestens eine weitere Art anorganischer Füllstoffpartikel, als Füllstoff in Polymerdispersionen.

## Claims

1. A preparation containing a water-soluble polymer or a water-dispersible polymer or a mixture of two or more thereof and filler particles, the filler particles being gypsum particles from waste-gas desulfurization plants (WDP gypsum) with a value for the particle size distribution x50 of 13 to 500 µm (as measured with a Sympatec Helos H0720 in isopropanol).

2. A preparation as claimed in claim 1, **characterized in that** the value for the particle size distribution x50 of the WDP gypsum particles is 30 µm to 250 µm.

3. A preparation as claimed in claim 1 or 2, **characterized in that** it contains WDP gypsum particles in admixture with at least one other type of filler particles.

4. A preparation as claimed in claim 4, **characterized in that** inorganic filler particles selected from the group consisting of chalk (CaCO₃), titanium dioxide, barium sulfate, silica flour, silica gel, dolomite or kaolin or a mixture of two or more thereof are present as the other type of filler particles.

5. A preparation as claimed in any of claims 1 to 4, **characterized in that** a polymer selected from the group consisting of polyurethanes, polyacrylates, polymethacrylates, polyvinyl esters, polystyrenes, polybutadienes, polyamides, polyesters, polyvinyl chlorides, ethylene/vinyl acetate copolymers (EVA), styrene/butadiene copolymers (SBR), styrene/acrylonitrile polymers (SAN), styrene/acrylate copolymers or a mixture of two or more thereof is present as the water-soluble or water-dispersible polymer.

6. A preparation as claimed in any of claims 1 to 5, **characterized in that** it contains at least 40% by weight of filler particles.

7. A preparation as claimed in any of claims 1 to 6, **characterized in that** it contains 50 to 99% by weight of WDP gypsum particles or a mixture containing WDP gypsum particles and at least one other type of inorganic filler particles, 1 to 50% by weight of polymer, 0 to 49% by weight of water and 0 to 49% by weight of other additives

8. A process for the production of a preparation containing a water-soluble polymer or a water-dispersible polymer or a mixture thereof and WDP gypsum particles with a particle size x50 of 13 to 500 µm (as measured with a Sympatec Helos H0720 in isopropanol) or a mixture of WDP gypsum particles and at least one other type of inorganic filler particles, **characterized in that** at least one water-soluble polymer or at least one water-dispersible polymer or a mixture of two or more thereof or an aqueous dispersion containing one or more such polymers is mixed with WDP gypsum particles having a particle size x50 of 13 to 500 µm (as measured with a Sympatec Helos H0720 in isopropanol) or a mixture of WDP gypsum particles and at least one other type of inorganic filler particles and optionally with water and one or more other additives in one or more mixing steps in any order and with any time intervals between individual mixing steps.

9. The use of WDP gypsum particles having a x50 value of the particle size distribution of 13 to 500 µm (as measured with a Sympatec Helos H0720 in isopropanol) for the production of surface coatings, surfacing compounds, sealing compounds, adhesives or moldings with a content of water-soluble or water-dispersible polymers.

10. The use claimed in claim 9, **characterized in that** the WDP gypsum particles have a x50 value for the particle size distribution of 30 to 250 µm.

11. The use of a mixture of inorganic filler particles containing WDP gypsum particles with a x50 value for the particle size distribution of 30 to 250 µm and at least one other type of inorganic filler particles as a filler in polymer dispersions.

## Revendications

1. Préparation contenant un polymère soluble dans l'eau ou un polymère dispersible dans l'eau ou un mélange des deux ou davantage de ceux-ci, et des particules de substance de charge, contenant comme particules de substance de charge, des particules de gypse provenant d'installations de désulfuration de gaz de fumée (particules de gypse REA) ayant pour la distribution des tailles de particules une valeur x50 de 13 à 500 µm (mesurée avec Sympatec Helos H0720 dans l'isopropanol).

2. Préparation selon la revendication 1,
**caractérisée en ce que**
la valeur pour la distribution des tailles de particules x50 des particules de gypse REA s'élève à 30 µm à 250 µm.

3. Préparation selon la revendication 1 ou la revendication 2,
**caractérisée en ce qu'**
elle renferme les particules de gypse REA en mélange avec au moins un autre type de particules de substance de charge.

4. Préparation selon la revendication 1,
**caractérisée en ce que**
comme autre type de particules de substance de charge, elle contient des particules de substance de charge non organiques, choisies dans le groupe formé de la craie (CO₃Ca), du dioxyde de titane, du sulfate de baryum, de la farine de quartz, du sel de silice, de la dolomite ou du kaolin, ou d'un mélange de deux ou davantage de celles-ci.

5. Préparation selon l'une des revendications 1 à 4,
**caractérisée en ce que**
comme polymères solubles dans l'eau ou dispersibles dans l'eau, elle contient un polymère choisi dans le groupe formé des polyuréthanes, des polyacrylates, des polyméthacrylates, des esters polyvinyliques, des polystyrènes ; des polybutadiènes, des polyamides, des polyesters, des chlorures de polyvinyle, des copolymères éthylène/acétate de vinyle (EVA), des copolymères styrène-butadiène (SBR), des copolymères styrène-acrylonitrile (SAN), des copolymères styrène-ester d'acide acrylique, ou un mélange à base de deux ou davantage de ceux-ci.

6. Préparation selon l'une des revendications 1 à 5,
**caractérisée en ce qu'**
elle contient au moins 40% en poids de particules de substance de charge.

7. Préparation selon l'une des revendications 1 à 6,
**caractérisée en ce qu'**
elle contient 50 à 99 % en poids des particules de gypse REA ou d'un mélange contenant des particules de gypse REA et d'au moins un autre type de particules de substance de charge non organique, 1 à 50 % en poids d'un polymère, de 0 à 49 % en poids d'cau et de 0 à 49 % en poids d'autres additifs.

8. Procédé de préparation d'une préparation contenant un polymère soluble dans l'eau ou un polymère dispersible dans l'eau, ou leur mélange, et des particules de gypse REA ayant une taille de particules x50 de 13 à 500 µm (mesuré avec Sympatec Helos H0720 dans l'isopropranol) ou un mélange de particules de gypse REA et d'au moins un autre type de substance de charge non organique,
**caractérisé en ce qu'**
on mélange au moins un polymère soluble dans l'eau ou au moins un polymère dispersible dans l'eau, ou un mélange à base de deux ou plus de ceux-ci, ou une dispersion aqueuse contenant un ou plusieurs de ces polymères, avec des particules de gypse REA ayant une taille de particules x50 de 13 à 500 µm (mesurée avec Sympatec Helos H0720 dans l'isopropanol), ou avec un mélange de particules de gypse REA et d'au moins un autre type de particules de substance de charge non organique, ainsi qu'éventuellement avec de l'eau et avec un ou plusieurs autres additifs,
en une ou plusieurs étapes de mélange dans n'importe quel ordre, et n'importe quel intervalle de temps entre les étapes individuelles de mélange.

9. Utilisation de particules de gypse REA ayant une valeur x50 de la distribution de la taille des particules allant de 13 à 500 µm (mesurée avec Sympatec Helos H0720 dans l'isopropanol) en vue de la production de revêtements de surfaces, de masses appliquées à la spatule, de masses d'étanchéité, de colles ou de solides moulés, ayant une teneur en polymères solubles dans l'eau ou dispersibles dans l'eau.

10. Utilisation selon la revendication 9,
**caractérisée en ce que**
les particules de gypse REA possèdent pour la distribution des tailles de particules une valeur x50 de 30 à 250 µm.

11. Utilisation d'un mélange de particules de substance de charge non organiques, contenant des particules de gypse REA ayant pour la distribution des tailles de particules une valeur x50 de 30 à 250 µm et au moins un autre type de particules de substance de charge non organique, en tant que substance de charge dans des dispersions de polymère.
